Europäisches Patentamt

European Patent Office

Office européen des brevets

(11) Numéro de publication: **0 269 494**
**A1**

(12) # DEMANDE DE BREVET EUROPEEN

(21) Numéro de dépôt: **87402450.8**

(22) Date de dépôt: **30.10.87**

(51) Int. Cl.⁴: **G 11 B 15/02**
**H 04 M 11/00, G 11 B 31/00**

(30) Priorité: **30.10.86 FR 8615143**

(43) Date de publication de la demande:
**01.06.88 Bulletin 88/22**

(84) Etats contractants désignés:
**AT BE CH DE ES FR GB GR IT LI LU NL SE**

(71) Demandeur: **Société à Responsabilité Limitée dite:**
**Technologies et Stratégies des Etats et des Entreprises**
**14, rue de Turbigo**
**F-75001 Paris (FR)**

(72) Inventeur: **André, Jacques**
**21, rue Ramey**
**F-75018 Paris (FR)**

(74) Mandataire: **Nony, Michel et al**
**Cabinet NONY & CIE 29, rue Cambacérès**
**F-75008 Paris (FR)**

(54) **Procédé et dispositif pour le montage télécommandé d'un programme de télévision.**

(57) Le dispositif comprend :
- une unité centrale (1) ;
- un modem (2) pour fournir à l'unité centrale des informations provenant d'une ligne téléphonique (3) qui comporte :
• des ordres de montage,
• au moins une première partie de la bande son du programme, à laquelle sont associés des tops de montage, et
• une première partie de la bande image du programme ;
- un appareil d'enregistrement (16) pour recevoir le support ;
- des moyens de stockage permanent (7,8) pour mémoriser des éléments d'images permanents ;
- des moyens de stockage provisoire (17,24) pour mémoriser temporairement la première partie de la bande image ;
- un mélangeur (23,25) pour combiner les éléments d'images mémorisés dans les moyens de stockage permanent et provisoire.
- L'unité centrale est agencée pour :
• commander l'appareil d'enregistrement de manière à enregistrer sur le support la première partie de la bande son lors de sa réception,
• commander le mélangeur de manière à combiner les éléments d'images conformément aux ordres de montage, et
• commander l'appareil d'enregistrement de manière à enregistrer sur le support, aux emplacements déterminés par les tops de montage, les séquences d'images obtenues par le mélangeur.

Fig. 1

EP 0 269 494 A1

**Description**

Procédé et dispositif pour le montage télécommandé d'un programme de télévision.

La présente invention concerne un procédé et un dispositif pour le montage télécommandé, sur un support tel qu'une vidéocassette, d'un programme de télévision comportant une bande son et une bande image.

On connait déjà des systèmes graphiques permettant de présenter des informations pour leur télédiffusion, à partir de graphiques numériques stockés et mis à jour par des données transmises par téléphone.

Il existe également de nombreux terminaux interactifs présentant la possibilité de télécommander le mélange par incrustation de graphiques simples et d'images stockés sur vidéodisque.

Par ailleurs, des robots manipulateurs de vidéocassettes permettent de programmer le montage pour leur télédiffusion de programmes courts stockés sur de telles vidéocassettes.

Toutefois, aucun système existant ne permet de monter sur une station automatique télécommandée, à partir d'informations transmises par ligne téléphonique, des programmes de télévision présentant à la fois une bande son et une bande image.

La présente invention vise à fournir un procédé et un dispositif présentant de telles caractéristiques.

A cet effet, l'invention a tout d'abord pour objet un procédé pour le montage télécommandé, sur un support tel qu'une vidéocassette, d'un programme de télévision comportant une bande son et une bande image, caractérisé par le fait que :

a) on émet sur une ligne téléphonique, depuis une station maître, à destination d'une station esclave où ledit support est disposé sur un appareil d'enregistrement, des informations comprenant :
- des ordres de montage,
- au moins une première partie de la bande son dudit programme, à laquelle sont associés des tops de montage, et
- une première partie de la bande image dudit programme ;

b) on reçoit informations à la station esclave et, lors de cette réception :
- on enregistre sur ledit support ladite première partie de la bande son, et
- on stocke provisoirement dans des mémoires appropriées les ordres de montage et ladite première partie de la bande image ;

c) on combine, conformément aux ordres de montage reçus, ladite première partie de la bande image stockée provisoirement à des éléments d'images mémorisés de façon permanente à la station esclave ; et

d) on enregistre sur ledit support, aux emplacements déterminés par les tops de montage, les séquences de la bande image ainsi obtenues, ainsi, éventuellement, que la partie restante de la bande son, mémorisée de façon permanente à la station esclave.

Le procédé selon l'invention comporte par conséquent la transmission sur une ligne téléphonique, depuis la station maître jusqu'à la station esclave télécommandée, d'une part d'ordres de montage , d'autre part de la bande son du programme à monter ou du moins d'une partie de celle-ci, et enfin des éléments d'actualisation de la bande image du programme. Des tops de montage sont associés à la bande son et permettent ultérieurement le montage de la bande image du programme aux emplacements souhaités.

Dans un mode de réalisation particulier de l'invention, on émet, préalablement à l'émission de ladite première partie de la bande son, une première série d'ordres de montage et, simultanément à l'enregistrement sur le support de ladite première partie de la bande son, on enregistre sur ce support, conformément aux ordres de ladite première série, des éléments de son et/ou des éléments d'images mémorisés de façon permanente à la station esclave.

Dans le cas où la transmission et le stockage provisoires de la première partie de la bande image sont effectués sous forme numérique et où les éléments d'images permanents sont mémorisés à la station esclave sous forme de signaux vidéo ladite combinaison est alors effectuée par mélange des sources numériques et vidéo.

Dans le cas d'éléments d'images permanents mémorisés à la station esclave sous forme numérique, on effectue un prémélange des éléments et de ladite première partie de la bande image.

De préférence, la station esclave est placée en mode de veille quand elle n'est pas activée par la station maître, cette dernière émettant en premier lieu une série d'ordres d'initialisation et de positionnement de la station esclave.

Une fois les opérations de montage terminées, la station esclave peut émettre à destination de la station maître un historique des opérations effectuées, la station maître émettant en réponse, à destination de la station esclave, soit un signal de fin d'operations, soit un ordre de lecture du support enregistré pour diffusion du programme.

La présente invention vise également à fournir un dispositif pour la mise en oeuvre du procédé décrit ci-dessus.

A cett effet, l'invention a pour objet un dispositif pour le montage télécommandé sur un support tel qu'une vidéocassette, d'un programme de télévision comportant une bande son et une bande image, caractérisée par le fait qu'il comprend :
- une unité centrale ;
- un modem pour fournir à ladite unité centrale des informations provenant d'une ligne téléphonique, lesdites informations comportant :
• des ordres de montage,
• au moins une première partie de la bande son dudit programme, à laquelle sont associés des tops de montage, et
• une première partie de la bande image dudit programme :
- un appareil d'enregistrement pour recevoir ledit support ;

- des moyens de stockage permanents pour mémoriser des éléments d'image permanents;
- des moyens de stockage provisoires pour mémoriser temporairement ladite première partie de la bande image ;
- un mélangeur pour combiner les éléments d'images mémorisés dans les moyens de stockage permanents et les moyens de stockage provisoires ;
- ladite unité centrale étant agencée pour :

• commander l'appareil d'enregistrement de manière à enregistrer sur ledit support ladite première partie de la bande son lors de sa réception,

• commander le mélangeur de manière à combiner lesdits éléments d'images conformément aux ordres de montage, et

• commander l'appareil d'enregistrement de manière à enregistrer sur ledit support, aux emplacements déterminés par les tops de montage, les séquences d'images obtenues par le mélangeur.

Ce dispositif peut également comprendre des moyens de stockage permanents pour mémoriser la partie restante de la bande son, l'unité centrale étant également agenée pour commander l'appareil d'enregistrement de manière à enregistrer cette partie restante sur ledit support à des emplacements déterminés par d'autres tops de montage.

Dans ce dernier cas, la bande son émise par la station maître comporte des "blancs", qui sont comblés lors du montage par les éléments de son mémorisés de façon à la station esclave.

On peut prévoir, dans le cas où lesdits moyens de stockage permanents et provisoires pour les éléments d'images comprennent chacun des moyens de stockage numériques, une carte graphique pour lire les informations contenues dans chacun des moyens de stokage numériques et pour les adresser audit mélangeur.

Si les moyens de stockage permanents pour les éléments d'images comprennent également des moyens de stockage vidéo, ledit dispositif peut comprendre un mélangeur pour combiner les éléments d'images ainsi stockés aux éléments d'images mémorisés dans lesdits moyens de stockage provisoires.

Dans un mode de réalisation particulier, le dispositif selon l'invention comprend une pluralité d'appareils d'enregistrement et de lecture et une matrice de commutation commandée par l'unité centrale pour provoquer le montage sur un appareil prédéterminé de ladite pluralité d'appareils, lesdits moyens de stockage permanents des éléments d'images comprenant au moins un autre appareil de ladite pluralité.

Dans ce cas, lesdits moyens de stockage permanents et provisoires peuvent être connectés à ladite matrice de commutation de manière à assurer les échanges d'informations entre les différents appareils d'enregistrement et de lecture et les différentes sources de son et d'images.

Cette matrice de commutation peut en outre posséder une sortie vers une antenne et/ou réseau de manière à assurer la diffusion immédiate du programme qui vient d'être monté.

Pendant cette diffusion, un autre appareil d'enregistrement et de lecture peut être utilisé pour le montage du programme suivant, tandis qu'un ou plusieurs autres appareils d'enregistrement et de lecture servent de sources pour le montage de ce nouveau programme.

Ces différentes opérations peuvent être totalement automatisées à l'aide d'un robot commandé par ladite unité centrale pour transférer les supports d'enregistrement entre les différents appareils de ladite pluralité.

On décrira maintenant à titre d'exemples non limitatifs des modes de réalisation particuliers de l'invention en référence aux dessins schématiques annexés dans lesquels :

- la figure 1 est un schéma d'un premier mode de réalisation d'une station esclave selon l'invention, et

- la figure 2 est un schéma d'un deuxième mode de réalisation.

Dans les dessins, les traits de liaison simples interrompus représentent des sons codés sous forme numérique, les traits simples continus représentent des sons sous forme analogique, les traits doubles interrompus représentent des images codées sous forme numérique et les traits doubles pleins représentent des images sous forme analogique.

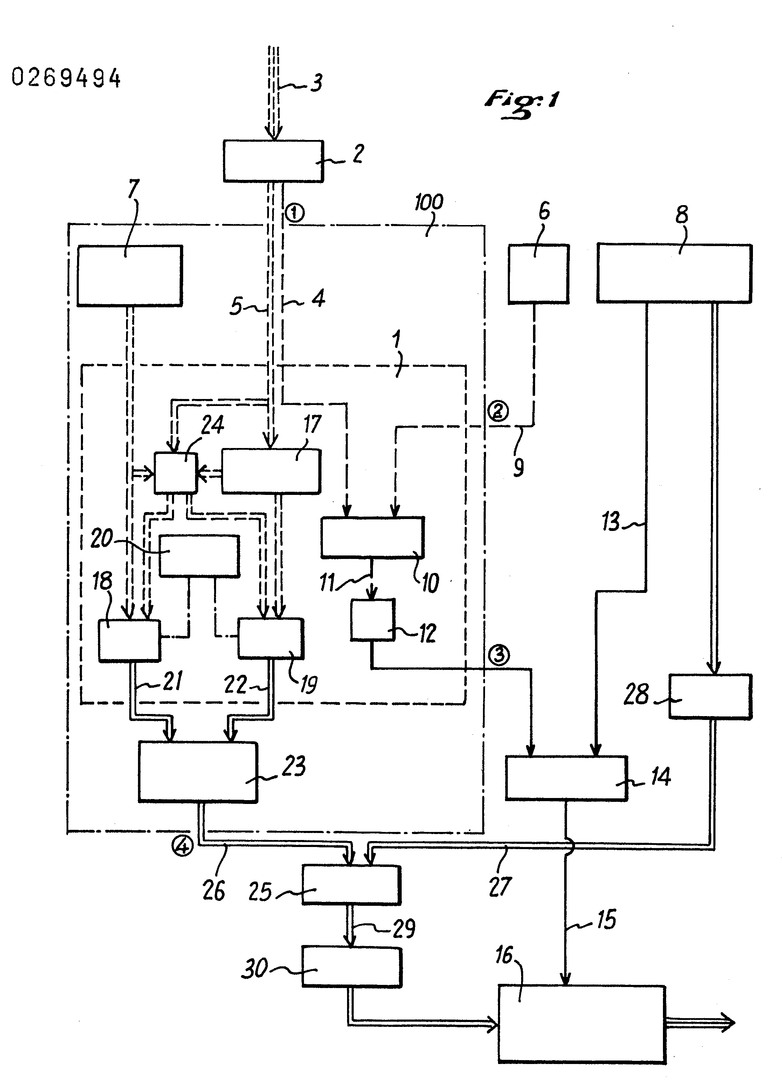

A la figure 1, l'ensemble 1 représente l'unité centrale du dispositif constituée par exemple par un micro-ordinateur.

L'unité centrale 1 reçoit par l'intermédiaire d'un modem 2 et d'une ligne téléphonique 3, par exemple à 64 Kbits/s par seconde, des informations qui lui sont adressées depuis une station maître (non représentée). Ces informations codées sous forme numérique comprennent une partie 4 au moins de la bande son du programme à monter et une partie 5 de la bande image. Cette partie 5 de la bande image est composée d'informations destinées à mettre à jour des éléments d'images stockés de manière permanente dans le dispositif sous une forme qui sera décrit plus en détail ci-après.

La bande son 4 comprend, d'une part des informations relatives au son du programme à monter, séparées éventuellement par des "blancs" destinés à être comblés ultérieurement par des informations stockées de façon permanente d'une manière qui sera également décrite plus en détail ci-après, et d'autre part des tops de montage qui sont associés à cette bande son. Ces tops de montage indiquent que certaines opérations de montage sont à effectuer aux emplacements où ils sont situés.

Enfin, les informations provenant de la ligne 3 comprennent également des ordres de montage (non représentés sur le dessin) et qui sont stockés provisoirement dans une mémoire de l'unité central 1, en vue de leur traitement ultérieur par le processeur de cette unité centrale conformément à un programme approprié. Ces ordres de montage spécifient les opérations de montage qui devront être effectuées aux emplacements déterminés par les tops de montage de manière à obtenir le programme désiré.

Le dispositif comprend par ailleurs des moyens de stockage permanent aussi bien pour des sons que pour des images.

En ce qui concerne les sons, ils peuvent être stockés sous forme numérique sur un disque optique numérique 6. Des éléments d'images permanents peuvent également être stockés sous forme numérique sur un disque dur 7. Enfin, un vidéodisque 8 permet de stocker tant des sons que des images sous forme analogique.

Lors de la réception des informations précitées par l'intermédiaire du modem, la bande son 4 est éventuellement mélangée à des informations de son numériques 9 provenant du disque optique 6 dans une unité de mixage numérique 10. Les informations numériques 11 qui en résultent sont décodées dans un convertisseur numérique/analogique 12. Elles sont ensuite éventuellement mélangées à des informations de son analogique 13 provenant du vidéodisque 8 dans une unité de mixage analogique 14. Le son analogique 15 sortant de l'unité 14 est enfin enregistré sur la piste son d'une vidéocassette montée sur un magnétoscope 16.

On notera que toutes ces opérations sont effectuées en temps réel au fur et à mesure de l'arrivée de la bande son 4 par l'intermédiaire du modem 2. Simultanément, les tops de montage sont enregistrés en vue du traitement ultérieur de la bande image.

Lors de leur réception, les informations numériques d'images 5 sont stockées dans une mémoire 17. Deux cartes graphiques 18 et 19 associées à une palette de couleurs 20 permettent de lire les informations sur le disque 7 et dans la mémoire 17 respectivement. Ces informations numériques sont ainsi transformées en signaux vidéo RVB (rouge, vert, bleu) 21 et 22 qui sont mélangés dans un mélangeur 23.

Le présent mode de réalisation comporte en outre une mémoire tampon très rapide 24 ayant accès aux informations d'images numériques provenant soit du modem 2, soit du disque dur 7, soit de la mémoire 17 afin d'augmenter la vitesse de traitement.

A titre d'exemple, le disque dur peut être un disque de 60 Moctets et les mémoires 17 et 24 peuvent être des mémoires vives de 20 Moctets et 4 Moctets respectivement.

Un deuxième étage de mélange d'images est prévu au niveau du mélangeur 25. Ce dernier reçoit, d'une part les éléments d'images 6 provenant du mélangeur 23, et d'autre part d'autres éléments d'image 27 provenant du vidéodisque 8 par l'intermédiaire d'un décodeur 28.

En sortie du mélangeur 25 l'image 29 est recodée dans un codeur 30 qui la met au standard du magnétoscope 16, puis elle est enregistrée sur la piste image de ce magnétoscope.

Tous les éléments du dispositif décrit ci-dessus sont commandés par l'unité centrale 1 à partir des ordres de montage reçus de la ligne 3. Les mélangeurs 23 et 25 permettant de réaliser tous les effets spéciaux désirés tels qu'incrustations, fondu enchaîné, sur imposition de caractères, animation, etc... à partir des éléments d'images contenus à titre permanent dans le disque dur 7 ou dans le vidéodisque 8 et des éléments d'images reçus de la ligne 3 à titre de mise à jour.

Les séquences ainsi obtenues sont enregistrées sur la bande image de la vidéocassette contenue dans le magnétoscope 16 aux emplacements définis par les tops de montage.

Le son lui-même peut comporter des éléments permanents contenus dans le disque optique numérique 6. Ces éléments permenents sont, soit mélangés en temps réel aux éléments de son, tels que des commentaires, reçus de la ligne 3, soit enregistrés ultérieurement sur la bande son de la vidéocassette aux emplacements définis par d'autres tops de montage.

A titre d'exemple, le dispositif représenté à la figure 1, permet le montage automatique de bulletins météo à partir d'informations qui lui sont adressées par la ligne téléphonique 3 depuis une station maître (non représentée).

Les éléments d'images permanents stockés sur le disque dur 7 et sur le vidéodisque 8 sont par exemple constitués des titres ou des fonds de carte. De même, la piste son du vidéodisque 8 ainsi que le disque optique numérique 6 peuvent contenir des éléments de son permanents tels que des musiques d'accompagnement de titres.

Les éléments d'images 5 stockés provisoirement dans la mémoire 17 lors de leur réception, sont par exemple constitués de dessins des fronts ou d'indications des témpuratures qui viendront se surimposer aux fonds de carte.

Enfin, la bande son 4 est dans ce cas constituée par des commentaires auxquels sont associés des tops de montage.

Les ordres de montage peuvent être simplement adressés à l'unité centrale 1 par l'intermédiaire du modem 2 après réception et enregistrement en temps réel de la bande son 4. Il est également possible d'envoyer avant cette bande son une première série d'ordres de montage destinés à commander le montage de certains parties du programme simultanément à la réception et à l'enregistrement de la bande son 4. Ceci est le cas en particulier lorsque des éléments de son stockés sur le disque optique numérique 6 sont mélangés en temps réel à la bande son 4 préalablement à son enregistrement sur la vidéocassette.

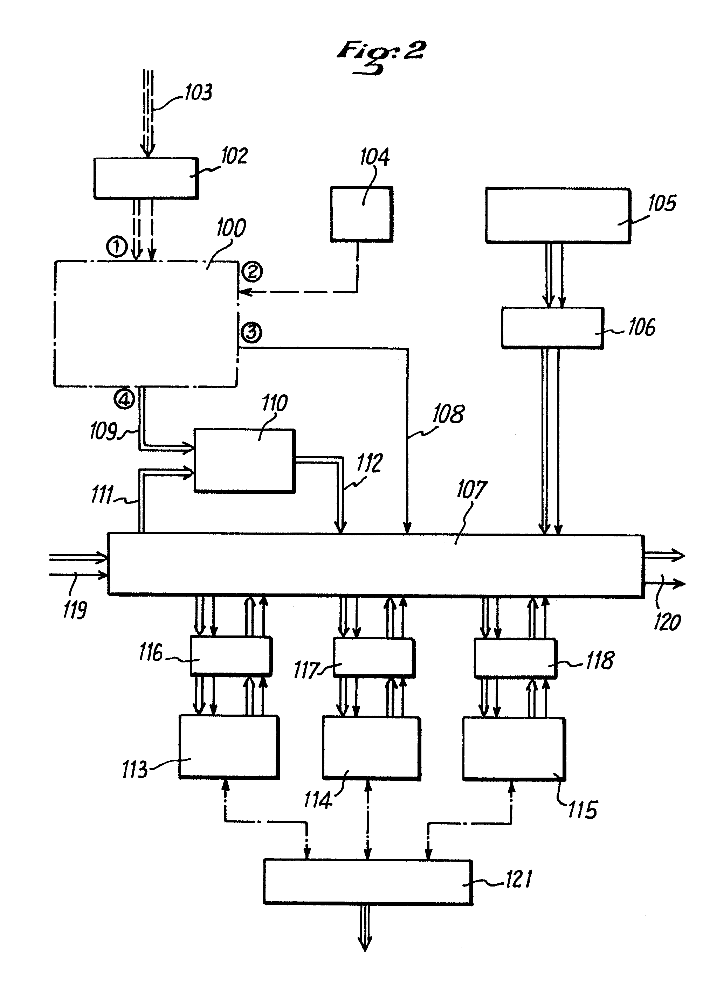

La figure 2 représente un autre mode de réalisation d'une station esclave selon l'invention, permettant la diffusion d'un programme préalablement monté simultanément au montage d'un nouveau programme. En outre, ce mode de réalisation permet l'insertion lors du montage dans le programme principal de programmes courts tels que des spots publicitaires stockés sur vidéocassette.

Dans la figure 2 le cadre 100 possède le même contenu que le cadre 100 de la figure 1. En particulier, le cadre 100 contient une unité centrale recevant des éléments d'images et de son par l'intermédiaire d'une modem 102, adressés depuis une station maître (non représentée) par une ligne téléphonique 103.

Le cadre 100 comporte également un disque dur pour le stockage numérique d'éléments d'images permanents ainsi que les cartes graphiques permettant d'assurer le traitement des éléments d'images numériques provenant soit de ce disque dur, soit du modem 102.

Le cadre 100 reçoit également les éléments de son numériques provenant d'un disque optique numérique 104 pour les traiter comme précédemment.

Par contre, la sortie du vidéodisque 105 est adressé par l'intermédiaire d'un décodeur 106 à une matrice de commutation 107. Cette matrice comprend également en entrée le son analogique 108 provenant, après traitement, soit de la ligne 103, soit du disque optique 104, soit du mélange de ces deux sources.

Le signal vidéo 109 issu du cadre 100 est adressé comme précédemment à l'entrée d'un mélangeur 110 recevant sur son autre entrée une des sorties vidéo 111 de la matrice de commutation 107. La sortie 112 du mélangeur 110 est adressée à une des entrées de cette matrice.

La matrice de commutation 107 est également connectée aussi bien en entrée qu'en sortie aux entrées/sorties de trois magnétoscopes 113, 114 et 115 par l'intermédiaire de trois codeurs/décodeurs 116, 117 et 118.

Enfin, la matrice 107 peut comporter une entrée de signaux hertziens 119 et peut posséder une sortie 120 vers une antenne ou un réseau de distribution.

Les trois magnétoscopes 113, 114 et 115 sont associés à un robot 121 de manière à assurer le transfert des vidéocassettes d'un magnétoscope à l'autre, ou entre les magnétoscopes et des cases de rangement, sous le contrôle de l'unité centrale du dispositif.

On constate par conséquent que les éléments d'images et de son provenant soit de la ligne 103, soit d'une des unités de stockage permanent, soit de l'entrée hertzienne 109, peuvent être adressés à l'un quelconque des magnétoscopes par l'intermédiaire de la matrice de commutation 107.

Cette matrice de commutation permet égalament de transférer des éléments de programme d'un magnétoscope à un autre. Elle permet également, grâce au bouclage réalisé par le mélangeur 110 de mélanger le signal vidéo 109 avec des éléments d'images provenant de l'une quelconque des unités de stockage.

Le fonctionnement de base du dispositif de la figure 2 est similaire à celui du dispositif de la figure 1. En particulier, le montage d'un programme de télévision sur l'un des magnétoscopes prédéterminés à partir d'éléments permanents stockés en mémoire et d'éléments de mise à jour reçus de la ligne 103 s'effectue en enregistrant préalablement la bande son puis en composant les séquences de programme conformément aux ordres de montage reçus de la ligne 103 et en enregistrant ces séquences aux emplacements définis par les tops de montage associés à la bande son.

Néanmoins, le robot 121 peut en outre sélectionner des vidéocassettes présélectionnées de manière à intercaler lors du montage des séquences entières préreregistrées. Cette possibilité est particulièrement intéressante pour l'insertion de programmes courts de durée d'utilisation limitée, comme des spots publicitaires, dont le stockage sur vidéodisque n'est pas économiquement envisageable.

Dans sa version représentée à la figure 2, le dispositif selon l'invention comporte trois magnétoscopes. L'un de ces magnétoscopes est destiné à l'émission d'un programme préalabement monté vers le réseau ou l'antenne 120. Un autre des magnétoscopes assure le montage d'un nouveau programme tandis que le troisième magnétoscope permet la lecture de programmes courts sélectionnés par le robot 121 en vue de leur enregistrement sur le magnétoscope de montage.

Diverses variantes et modifications peuvent bien entendu être apportées à la description qui précède sans sortir pour autant du cadre ni de l'esprit de l'invention.

## Revendications

1. Procédé pour le montage télécommandé, sur un support tel qu'une vidéocassette, d'un programme de télévision comportant une bande son et une bande image, caractérisé par le fait que :

a) on émet sur une ligne téléphonique, depuis une station maître, à destination d'une station esclave où ledit support est disposé sur un appareil d'enregistrement, des informations comprenant :

- des ordres de montage,
- au moins une première partie de la bande son dudit programme, à laquelle sont associés des tops de montage, et
- une première partie de la bande image dudit programme;

b) on reçoit lesdites informations à la station esclave et, lors de cette réception :

- on enregistre sur ledit support ladite première partie de la bande son, et
- on stocke provisoirement dans des mémoires appropriées les ordres de montage et ladite première partie de la bande image ;

c) on combine, conformément aux ordres de montage reçus, ladite première partie de la bande image stockée provisoirement à des éléments d'images mémorisés de façon permanente à la station esclave ; et

d) on enregistre sur ledit support, aux emplacements déterminés par les tops de montage, les séquences de la bande image ainsi obtenues, ainsi éventuellement, que la partie restante de la bande son, mémorisée de façon permanente à la station esclave.

2. Procédé selon la revendication 1, caractérisé par le fait que, préalablement à l'émission de ladite première partie de la bande son, on émet une première série d'ordres de montage, et que, simultanément à l'enregistrement sur le support de ladite première partie de la bande son, on enregistrement sur ce support, conformément aux ordres de ladite première série, des éléments de son et/ou des éléments d'images mémorisés de façon permanente à la station esclave.

3. Procédé selon l'une quelconque des revendications 1 et 2, caractérisé par le fait que la transmission et le stockage provisoire de ladite première partie de la bande image sont effectués sous forme numérique , que lesdits éléments d'images mémorisés de façon permanente à la station esclave le sont sous forme de signaux vidéo, et que ladite combinaison est effectuée par mélange des sources numérique et vidéo.

4. Procédé selon la revendication 3, caractérisé par le fait que certains éléments d'images mémorisés de façon permanente à la station esclave le sont également sous forme numérique, et que l'on effectue un prémélange de ces éléments et de ladite première partie de la bande image.

5. Procédé selon l'une quelconque des revendications 1 à 4, caractérisé par le fait que la station esclave est placée en mode de veille quand elle n'est pas activée par la station maître, et que cette dernière émet en premier lieu, une série d'ordres d'intialisation et de positionnement de la station esclave.

6. Procédé selon l'une quelconque des revendications 1 à 5, caractérisé par le fait qu'une fois les opérations de montage terminées, la station esclave émet, à destination de la station maître, un historique des opérations effectuées, et que le station maître émet en réponse, à destination de la station esclave, soit un signal de fin d'opération, soit un ordre de lecture du support enregistré pour diffusion du programme.

7. Dispositif pour le montage télécommandé, sur un support tel qu'une vidéocassette, d'un programme de télévision comportant une bande son et une bande image, caractérisé par le fait qu'il comprend :
- une unité centrale (1) ;
- un modem (2) pour fournir à ladite unité centrale des informations provenant d'une ligne téléphonique (3), lesdites informations comportant :
• des ordres de montage,
• au moins une première partie de la bande son dudit programme, à laquelle sont associés des tops de montage, et
• une première partie de la bande image dudit programme ;
- un appareil d'enregistrement (16) pour recevoir ledit support ;
- des moyens de stockage permanent (7,8) pour mémoriser des éléments d'images permanents ;
- des moyens de stockage provisoire (17,24) pour mémoriser temporairement ladite première partie de la bande image ;
- un mélangeur (23,25) pour combiner les éléments d'images mémorisés dans les moyens de stockage permanent et les moyens de stockage provisoire ;
- ladite unité centrale étant agencée pour :
• commander l'appareil d'enregistrement de manière à enregistrer sur ledit support ladite première partie de la bande son lors de sa réception,
• commander le mélangeur de manière à combiner lesdits éléments d'images conformément aux ordres de montage, et
• commander l'appareil d'enregistrement de manière à enregistrer sur ledit support, aux emplacements déterminés par les tops de montage, les séquences d'images obtenues par le mélangeur.

8. Dispositif selon la revendication 7, caractérisé par le fait qu'il comprend également des moyens de stockage permanents (6) pour mémoriser la partie restante de la bande son, l'unité centrale étant également agencée pour commander l'appareil d'enregistrement de manière à enregistrer cette partie restante sur ledit support à des emplacements déterminés par d'autres tops de montage.

9. Dispositif selon l'une quelconque des revendications 7 et 8, caractérisé par le fait que lesdits moyens de stockage permanents et provisoires pour les éléments d'images comprennant chacun des moyens de stoackage numérique (7,17), une carte graphique (18,19) étant prévue pour lire les informations contenues dans chacun des moyens de stockage numérique et pour les adresser audit mélangeur (23).

10. Dispositif selon l'une quelconque des revendications 7 à 9, caractérisé par le fait que lesdits moyens de stockage permanents pour les éléments d'images comprennent des moyens de stockage vidéo (8), ledit dispositif comprenant un mélangeur (25) pour combiner les éléments d'images ainsi stockés aux éléments d'image mémorisés dans lesdits moyens de stockage provisoires.

11. Dispositif selon l'une quelconque des revendications 7 à 10, caractérisé par le fait qu'il comprend une pluralité d'appareils d'enregistrement et de lecture (113-115), et une matrice de commutation (107) commandée par l'unité centrale pour provoquer le montage sur un appareil prédéterminé de ladite pluralité d'appareils, lesdits moyens de stockage permanents des éléments d'images comprenant au moins un autre appareil de ladite pluralité.

12. Dispositif selon la revendication 11, caractérisé par le fait que lesdits moyens de stockage permanent et provisoire sont connectés à ladite matrice de commutation.

13. Dispositif selon l'une quelconque des revendications 11 et 12, caractérisé par le fait que ladite matrice de commutation possède une sortie (120) vers une antenne et/ou un réseau.

14. Dispositif selon l'une quelconque des revendications 11 à 13, caractérisé par le fait qu'il comprend un robot (121) commandé par ladite unité centrale pour transférer les supports d'enregistrement entre les différents appareils de ladite pluralité.

0269494

*Fig:1*

0269494

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | L'ONDE ELECTRIQUE, vol. 53, no. 9, octobre 1973, pages 327-332, Paris, FR; P. DUPUIS et al.: "La régie finale automatisée" <br> * Page 328, colonne de gauche, ligne 43 - page 332, colonne de droite, ligne 26; figures * <br> --- | 1,5-8, 10-13 | G 11 B   15/02 <br> H 04 M   11/00 <br> G 11 B   31/00 |
| A | EP-A-0 187 073  (SORRIAUX et al.) <br> * Page 1, ligne 22 - page 6, ligne 20; figures * <br> --- | 1,7-9 | |
| A | EP-A-0 113 993  (MONTAGE COMPUTER CORP.) <br> * Page 3, ligne 1 - page 24, ligne 4; figures 1-8,13-16 * <br> --- | 1-4,7-12 | |
| A | US-A-4 551 832  (CARLL) <br> * Colonne 2, ligne 46 - colonne 16, ligne 31; figures * <br> --- | 1,7 | |
| A | 14th INTERNATIONAL TV SYMPOSIUM MONTREUX, 6-12 juin 1985, Symposium Record CATV Sessions, 1985, pages 350-364, Montreux, CH; P. DUPUIS et al.: "Expérimentation des services de télévidéothèque" <br> * Page 352, ligne 1 - page 355, ligne 26; figures * <br> --- | 1,7 | |
| A | BBC NACHRICHTEN, vol. 53, nos. 9/10, septembre/octobre 1971, pages 303-305; G. HOCK et al.: "Die Fernwirktechnik im Dienste von Rundfunkanstalten: Fernsteuerung von Sendern" <br> * En entier * <br> ----- | 1,7 | |

**DOMAINES TECHNIQUES RECHERCHES (Int. Cl.4)**

G 11 B
H 04 M
H 04 N
H 04 H

Le présent rapport a été établi pour toutes les revendications

| Lieu de la recherche | Date d'achèvement de la recherche | Examinateur |
|---|---|---|
| LA HAYE | 03-02-1988 | DEVERGRANNE C.A. |

EPO FORM 1503 03.82 (P0402)